# EUROPÄISCHE PATENTSCHRIFT

(11) **EP 3 158 209 B1**
(45) Veröffentlichungstag und Bekanntmachung des Hinweises auf die Patenterteilung: **01.01.2020**
(21) Anmeldenummer: 15726943.2
(22) Anmeldetag: 01.06.2015
(51) Int. Cl.: F16B 17/00, B23P 11/00

(54) **VERFAHREN ZUM VERPRESSEN EINER KUGEL MIT EINEM ERSTEN BAUTEIL**
PROCESS TO PRESS A BALL IN A FIRST WORKPIECE
PROCÉDÉ POUR PRESSER UNE BILLE DANS UNE PREMIÈRE PIÈCE

(30) Priorität: 18.06.2014 DE 102014211656
(43) Veröffentlichungstag der Anmeldung: 26.04.2017
(73) Patentinhaber: Bayerische Motoren Werke Aktiengesellschaft, 80809 München (DE)
(72) Erfinder: WEIZENBERGER, Richard, 94501 Aidenbach (DE); WALDHERR, Christian, 84333 Malgersdorf (DE); NIEKERK, Johann, 80993 München (DE)
(86) Internationale Anmeldenummer: PCT/EP2015/062114
(87) Internationale Veröffentlichungsnummer: WO 2015/193091

(56) Entgegenhaltungen:
- EP-A1- 3 094 869
- US-A- 2 065 468
- US-A- 4 071 949

## Beschreibung

Die vorliegende Erfindung betrifft ein Verfahren zum Verpressen einer Kugel mit einem ersten Bauteil gemäß dem Oberbegriff des Patentanspruches 1. Ein solches Verfahren ist aus dem Dokument DE10125117A1 bekannt.

Ein Verfahren gemäß dem Oberbegriff des Patentanspruches 1 ist aus der US 2 065 468 A bekannt. Zum technischen Hintergrund der Erfindung zählt die US 4 071 949 A, DE 101 25 117 A1, EP 3 092 103 A1, EP 2 698 549 A1, EP 3 094 689 A1 sowie die EP 3 047 158 A1.

Bauteilverbindungen mit kugelförmigen Verbindungselementen sind z.B. aus der DE 10 2012 206 938 B3 oder der DE 10 2012 212 101 B3 bekannt. Dort werden Verbindungselemente verwendet, die aus einer Kugel oder aus mehreren miteinander verbundenen Kugeln bestehen. Die Verbindungselemente sind dabei auf ein erstes Bauteil aufgeschweißt.

Aufgabe der Erfindung ist es, ein alternatives Verfahren zum Verbinden eines Verbindungselements mit einem Bauteil sowie eine auf diesem Verfahren basierende Bauteilverbindung anzugeben.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht darin, eine Kugel in ein in einem ersten Bauteil vorgesehenes Loch einzuführen, derart, dass eine Äquatorebene der Kugel annähernd oder exakt in einer Mittelebene des ersten Bauteils im Lochbereich liegt, und einen Randbereich des in dem ersten Bauteil vorgesehenen Durchgangslochs so zu verpressen, dass Material des ersten Bauteils zur Kugel hin fließt und sich eng anliegend an den Außenumfang der Kugel anschmiegt. Dadurch ergibt sich zwischen dem ersten Bauteil und der Kugel ein Reibschluss und zusätzlich ein gewisser Formschluss, wodurch die Kugel translatorisch und fest und drehfest mit dem ersten Bauteil verbunden ist.

Die Kugel kann auch als "Verbindungselement" bezeichnet sein oder die Kugel kann einen Teil eines aus weiteren Elementen bestehenden Verbindungelements bilden. Der Begriff "Kugel" ist nicht notwendigerweise auf eine exakte Kugelgeometrie im mathematischen Sinne beschränkt, sondern kann auch kugelähnliche Elemente umfassen.

Das erfindungsgemäße Verbindungselement kann, aus zwei oder mehreren miteinander verbundenen Kugeln bestehen. Im Falle eines Verbindungselements, welches aus zwei Kugeln besteht, kann man auch von einer "Doppelkugel" sprechen. Die einzelnen Kugeln eines solchen Verbindungselements können miteinander verschweißt oder in anderer Weise miteinander verbunden sein. Ein aus mehreren "Teilelementen" bestehendes Verbindungselement muss aber nicht notwendigerweise ausschließlich aus Kugeln bestehen. Denkbar ist auch ein Verbindungselement, welches eine Kugel oder mehrere Kugeln aufweist, wobei von der Kugel oder von einer der Kugeln ein anderes Teilelement, wie z.B. ein Gewindebolzen, ein Mehrkant o.ä. absteht.

Das erfindungsgemäße Verfahren zum Einpressen einer Kugel bzw. eines Verbindungselementes, welches durch eine Kugel gebildet ist oder welches mindestens eine Kugel aufweist, kann wie folgt beschrieben werden.

Zunächst wird ein erstes Bauteil bereitgestellt, welches ein kreisförmiges Durchgangsloch aufweist. Anschließend wird eine Metallkugel bzw. ein Verbindungselement, welches mindestens eine Kugel, insbesondere eine Metallkugel, aufweist, bereitgestellt. Der Durchmesser der Kugel ist höchstens gleich groß wie der Durchmesser des Durchgangslochs, aber nicht wesentlich kleiner. Ein Innenumfang des Durchgangslochs reicht also an einen Außenumfang der Kugel heran.

Anschließend wird die Kugel in das Durchgangsloch eingebracht, derart, dass eine Äquatorebene der Kugel annähernd oder exakt in einer Mittelebene des ersten Bauteils liegt. Anders ausgedrückt, ragt die Kugel auf beiden Seiten des ersten Bauteils annähernd oder exakt gleich weit aus dem ersten Bauteil heraus. Anschließend wird das erste Bauteil in einem Randbereich des Durchgangslochs verpresst, derart, dass Material des ersten Bauteils zur Kugel hin fließt und sich enganliegend an den Außenumfang der Kugel anschmiegt.

Es kann vorgesehen sein, dass beim Verpressen des ersten Bauteils Material des ersten Bauteils in einen Bereich oberhalb und in einen Bereich unterhalb der Äquatorebene der Kugel fließt und sich an die Kugel anschmiegt, so dass sich zusätzlich zu einem Reibschluss ein gewisser Formschluss zwischen dem ersten Bauteil und der Kugel ergibt.

Nach einer Weiterbildung der Erfindung erfolgt das Verpressen mittels eines aus einem Oberwerkzeug und einem Unterwerkzeug bestehenden Presswerkzeug, wobei das Oberwerkzeug von einer ersten Seite des ersten Bauteils und das Unterwerkzeug von einer der ersten Seite gegenüberliegenden zweiten Seite des ersten Bauteils an dem ersten Bauteil angreift. Das Oberwerkzeug und/oder das Unterwerkzeug kann die Form einer Hülse bzw. eines Kreiszylinders haben. An einer Stirnseite des Oberwerkzeugs und/oder an einer Stirnseite des Unterwerkzeugs kann eine wulstartige Erhebung vorgesehen sein, die beim Verpressen in das erste Bauteil eingeprägt wird. Durch eine derartige wulstartige Erhebung wird beim Verpressen ein Materialfluss des ersten Bauteils in Richtung zur Kugel hin unterstützt.

Beim Verpressen kann das erste Bauteil auf einer Stützmatrize auf- oder anliegen. Das erste Bauteil kann beim Verpressen auch zwischen einer Stützmatrize und einem Niederhalter eingespannt sein, wobei die Stützmatrize und/oder der Niederhalter jeweils ein Loch oder eine Vertiefung aufweisen, das bzw. die größer als das Oberwerkzeug und das Unterwerkzeug sind. Das Oberwerkzeug kann somit in dem Niederhalter und das Unterwerkzeug in der Stützmatrize aufgenommen sein.

Bei dem ersten Bauteil kann es sich z.B. um ein Metallblech handeln. Wesentlich ist, dass es sich bei dem Material des ersten Bauteils um ein Material handelt, welches eine hinreichende Duktilität aufweist, die ein Verpressen, d.h. ein Fließen während des Verpressens ermöglicht. Bei dem Verbindungselement bzw. der Kugel kann es sich insbesondere um eine Metall- bzw. Stahlkugel handeln.

Sofern eine einzelne Kugel mit dem ersten Bauteil verpresst wird, kann vor oder nach dem Verpressen mindestens eine weitere Kugel auf die Kugel aufgeschweißt werden.

Wie bereits angedeutet, kann vorgesehen sein, dass die mit dem ersten Bauteil zu verpressende Kugel vor dem Verpressen Teil eines aus mindestens zwei Kugeln bestehenden Verbindungselements oder Teil eines Verbindungselements ist, das außer der mit dem ersten Bauteil zu verpressenden Kugel einen weiteren Teil aufweist.

Nach dem Verpressen des ersten Bauteils mit der Kugel kann die Kugel mit dem ersten Bauteil verschweißt werden. Beispielsweise kann die Kugel über eine geschlossene Ringnaht mit dem ersten Bauteil verschweißt werden. Das Verschweißen kann z.B. mittels einer entfernt von der Kugel angeordneten Laser-Schweißvorrichtung erfolgen.

Vollständigkeitshalber sei noch die erfindungsgemäße Bauteilverbindung an sich näher beschrieben. Eine Bauteilverbindung gemäß der Erfindung weist ein erstes Bauteil auf, in dem ein Durchgangsloch vorgesehen ist. Ein Verbindungselement, das durch eine Kugel gebildet ist oder das mindestens eine Kugel aufweist, bildet mit dem Durchgangsloch des ersten Bauteils eine Pressverbindung, wobei die Kugel auf beiden Seiten des ersten Bauteils aus dem ersten Bauteil heraus ragt.

Desweiteren weist die Bauteilverbindung ein zweites Bauteil auf, welches ein Durchgangsloch oder eine Aufnahmeöffnung aufweist, in das oder in die das Verbindungselement bzw. die Kugel hinein ragt. Gemäß der Erfindung wirkt das zweite Bauteil formschlüssig mit dem in das Durchgangsloch des ersten Bauteils eingepressten Verbindungselements zusammen, so dass die beiden Bauteile an der Stelle, an der das Verbindungselement in das in dem zweiten Bauteil vorgesehene Durchgangsloch bzw. die Ausnehmung hinein ragt, relativ zueinander zentriert sind.

Auf diese Weise können z.B. im Fahrzeugkarosseriebau zwei miteinander zu verbindende Karosserieteile in einfacher und effizienter Weise sehr exakt relativ zueinander positioniert werden.

Nach einer Weiterbildung der Erfindung ist das in dem zweiten Bauteil vorgesehene Durchgangsloch oder die in dem zweiten Bauteil vorgesehene Ausnehmung so dimensioniert, dass sich beim Zusammenstecken der beiden Bauteile, d.h. beim Einstecken des Verbindungselements in das Durchgangsloch oder in die Ausnehmung des zweiten Bauteils eine Klemmverbindung ergibt. Die beiden Bauteile können also über das Verbindungselement aneinandergeklemmt oder aneinandergeclipst werden.

Alternativ oder ergänzend dazu kann auf das Verbindungselement auch ein Clipelement aus Kunststoff aufgeclipst werden. Das zweite Bauteil an sich muss also nicht notwendigerweise auf das von dem ersten Bauteil abstehende Verbindungselement aufgeclipst sein. Eine Klemmverbindung zwischen den beiden Bauteilen kann auch durch ein nach dem Zusammenfügen der beiden Bauteile auf das Verbindungelement aufgeclipstes Clipelement erreicht werden. In diesem Fall werden die Bauteile durch das Clipelement zusammengehalten.

Zusätzlich zu einer derartigen formschlüssigen Klemmverbindung können die beiden Bauteile in anderer Weise miteinander verbunden werden, z.B. über eine Schraubverbindung, eine Schweißverbindung, eine Nietverbindung o.ä.

Im Folgenden wird die Erfindung im Zusammenhang mit der Zeichnung näher erläutert. Es zeigen:
- Fig. 1: eine in ein Durchgangsloch eines ersten Bauteils eingeführte Kugel vor dem Verpressen; und

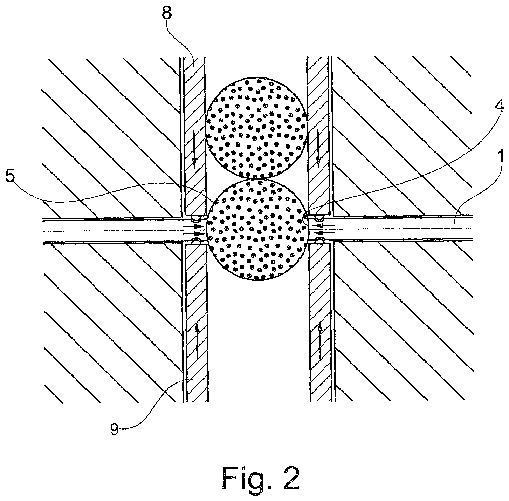

- Fig. 2: die Kugel nach dem Verpressen.

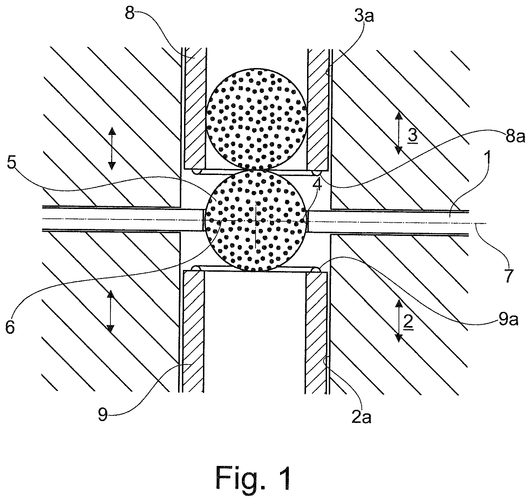

Fig. 1 zeigt ein erstes Bauteil 1, bei dem es sich bspw. um ein Stahl- oder Aluminiumblech handeln kann.

Das erste Bauteil 1 liegt auf einer Stützmatrize 2 auf und wird mittels eines Niederhalters 3 gegen die Stützmatrize 2 gepresst. Das erste Bauteil 1 ist also zwischen die Stützmatrize 2 und den Niederhalter 3 eingeklemmt. In der Stützmatrize 2 und dem Niederhalter 3 ist jeweils eine Ausnehmung 2a bzw. 3a vorgesehen. Die Ausnehmungen 2a, 3a können z.B. kreiszylindrisch sein.

Das erste Bauteil 1 weist ein Durchgangsloch 4 auf, das kreiszylindrisch ist. In das Durchgangsloch 4 wird eine Kugel 5 eingebracht. Bei der Kugel 5 kann es sich bspw. um eine Stahlkugel handeln. Die Kugel 5 wird so in das Durchgangsloch 4 eingebracht, dass eine Äquatorebene 6 der Kugel 5 in einer Mittelebene 7 des ersten Bauteils 1 liegt. Die Kugel 5 ragt somit nach oben und unten in etwa oder exakt gleich weit aus dem Durchgangsloch 4 des ersten Bauteils 1 heraus.

Wie aus Fig. 1 ersichtlich ist, ist der Durchmesser der Kugel 5 exakt so groß wie der Durchmesser des Durchgangslochs 4 oder nur geringfügig kleiner als der Durchmesser des Durchgangslochs 4. Der Rand des Durchgangslochs 4 reicht also bis an den Außenumfang der Kugel 5 heran.

Mittels eines hülsenartigen Oberwerkzeugs 8 und eines hülsenartigen Unterwerkzeugs 9 wird das erste Bauteil 1 mit der Kugel 5 verpresst. Das Oberwerkzeug 8 ist in der Ausnehmung 3a des Niederhalters 3 längsverschieblich angeordnet. Das Unterwerkzeug 9 ist in der Ausnehmung 2a der Stützmatrize 2 verschieblich angeordnet.

An einer Stirnseite des Oberwerkzeugs 8 ist eine umlaufende wulstartige Erhebung 8a vorgesehen. An einer Stirnseite des Unterwerkzeugs 9 ist eine ähnliche oder identische, umlaufende wulstartige Erhebung 9a vorgesehen.

Durch Zusammenfahren des Oberwerkzeugs 8 und des Unterwerkzeugs 9 wird das erste Bauteil 1 im Randbereich des Durchgangslochs 4 mit der Kugel 5 verpresst. Die wulstartigen Erhebungen 8a, 9a des Oberwerkzeugs 8 bzw. des Unterwerkzeugs 9 prägen sich in das erste Bauteil ein und bewirken einen Fluss von Material des ersten Bauteils 1 zur Kugel 5 hin. Das beim Verpressen fließende Material des ersten Bauteils 1 schmiegt sich eng anliegend an den Außenumfang der Kugel 5 an, wodurch sich zwischen dem ersten Bauteil 1 und der Kugel 5 ein Reibschluss und zusätzlich ein gewisser Formschluss ergibt.

## Patentansprüche

1. Verfahren zum Einpressen einer Kugel (5) in ein erstes Bauteil (1), mit folgenden Schritten:
- Bereitstellen eines ersten Bauteils (1), welches ein kreisförmiges Loch aufweist,
- Bereitstellen einer Kugel (5), insbesondere einer Metallkugel,
- Einbringen der Kugel (5) in das Loch (4),
- Verpressen des ersten Bauteils (1) in einem Randbereich des Lochs (4), derart, dass Material des ersten Bauteils (1) zur Kugel (5) hin fließt und sich eng anliegend an den Außenumfang der Kugel (5) anschmiegt, wobei
• auf die Kugel (5) vor oder nach dem Verpressen mindestens eine weitere Kugel aufgeschweißt wird oder
• als Kugel (5) eine Kugel verwendet wird, die vor dem Verpressen Teil eines aus mindestens zwei Kugeln bestehenden Verbindungselements oder Teil eines Verbindungselements ist, das außer der zu verpressenden Kugel einen weiteren Teil aufweist,
**dadurch gekennzeichnet, dass**
das Loch ein Durchgangsloch ist, und dass der Durchmesser der Kugel höchstens gleich groß wie der Durchmesser des Durchgangslochs ist, wobei ein Innenumfang des Durchgangslochs an einen Außenumfang der Kugel heranreicht, und dass die Kugel derart in das Durchgangsloch eingebracht wird, dass eine
Äquatorebene der Kugel in einer Mittelebene des ersten Bauteils liegt.

2. Verfahren nach Anspruch 1, **dadurch gekennzeichnet, dass** beim Verpressen des ersten Bauteils (1) Material des ersten Bauteils (1) in einen Bereich oberhalb und in einen Bereich unterhalb der Äquatorebene (6) der Kugel (5) fließt und sich eng anliegend an die Kugel (5) anschmiegt, so dass sich zusätzlich zu einem Reibschluss ein Formschluss zwischen dem ersten Bauteil (1) und der Kugel (5) ergibt.

3. Verfahren nach einem der Ansprüche 1 oder 2, **dadurch gekennzeichnet, dass** das Verpressen mittels eines Oberwerkzeugs (8) und eines Unterwerkzeugs (9) erfolgt, wobei das Oberwerkzeug (8) von einer ersten Seite des ersten Bauteils (1) und das Unterwerkzeug von einer der ersten Seite gegenüberliegenden zweiten Seite des ersten Bauteils (1) an dem ersten Bauteil (1) angreift.

4. Verfahren nach Anspruch 3, **dadurch gekennzeichnet, dass** das Oberwerkzeug (8) und/oder das Unterwerkzeug (9) hülsenartig gestaltet ist.

5. Verfahren nach einem der Ansprüche 3 oder 4, **dadurch gekennzeichnet, dass** an einer an dem ersten Bauteil (1) anliegenden Stirnseite des Oberwerkzeugs (8) und/oder an einer an dem ersten Bauteil (1) anliegenden Stirnseite des Unterwerkzeugs (9) eine wulstartige Erhebung (8a, 9a) vorgesehen ist, die beim Verpressen in das erste Bauteil (1) eingeprägt wird.

6. Verfahren nach einem der Ansprüche 1 bis 5, **dadurch gekennzeichnet, dass** als erstes Bauteil ein Metallblech verwendet wird.

7. Verfahren nach einem der Ansprüche 1 bis 6, **dadurch gekennzeichnet, dass** die Kugel (5) eine Metallkugel, insbesondere eine Stahlkugel, ist.

8. Verfahren nach einem der Ansprüche 1 bis 7, **dadurch gekennzeichnet, dass** die Kugel (5) nach dem Verpressen mit dem ersten Bauteil (1) verschweißt wird.

9. Verfahren nach Anspruch 8, **dadurch gekennzeichnet, dass** das Verschweißen durch eine entfernt von der Kugel (5) angeordnete Laser-Schweißvorrichtung erfolgt.

## Claims

1. Method for pressing a ball (5) into a first component (1), the method comprising the steps of:
- providing a first component (1) having a circular hole,
- providing a ball (5), in particular a metal ball,
- introducing the ball (5) into the hole (4),
- pressing the first component (1) in an edge region of the hole (4) in such a way that material of the first component (1) flows toward the ball (5) and nestles against the outer circumference of the ball (5) in a tightly contacting manner, wherein
• at least one further ball is welded onto the ball (5) prior to or after the pressing, or
• a ball which, prior to the pressing, is part of a connection element consisting of at least two balls or part of a connection element having a further part in addition to the ball to be pressed is used as the ball (5),
**characterised in that**
the hole is a through-hole, and **in that** the diameter of the ball is at most equal in size to the diameter of the through-hole, wherein an inner circumference of the through-hole approximates an outer circumference of the ball, and **in that** the ball is introduced into the through-hole in such a way that an equatorial plane of the ball lies in a central plane of the first component.

2. Method according to claim 1, **characterised in that** during the pressing of the first component (1), material of the first component (1) flows into a region above and into a region below the equatorial plane (6) of the ball (5) and nestles against the ball (5) in a tightly contacting manner such that, in addition to a press fit, a form-fit is obtained between the first component (1) and the ball (5).

3. Method according to one of claims 1 or 2, **characterised in that** the pressing takes place by means of an upper tool (8) and a lower tool (9), wherein the upper tool (8) acts on the first component (1) from a first side of the first component (1), and the lower tool acts on the first component (1) from a second side of the first component (1), the second side being opposite the first side.

4. Method according to claim 3, **characterised in that** the upper tool (8) and/or the lower tool (9) are configured in sleeve-like form.

5. Method according to one of claims 3 or 4, **characterised in that** a bead-like elevation (8a, 9a) is provided on an end side of the upper tool (8) that bears against the first component (1) and/or on an end side of the lower tool (9) that bears against the first component (1) and is embossed into the first component (1) during the pressing.

6. Method according to one of claims 1 to 5, **characterised in that** a metal sheet is used as first component.

7. Method according to one of claims 1 to 6, **characterised in that** the ball (5) is a metal ball, especially a steel ball,

8. Method according to one of claims 1 to 7, **characterised in that** the ball (5) is welded to the first component (1) after the pressing.

9. Method according to claim 8, **characterised in that** the welding is carried out via a laser welding apparatus situated remotely from the ball (5).

## Revendications

1. Procédé permettant d'introduire à force une sphère (5) dans un premier composant (1) comprenant les étapes suivantes consistant à :
- se procurer un premier composant (1) ayant un perçage circulaire,
- se procurer une sphère (5), en particulier une sphère en métal,
- introduire la sphère (5) dans le perçage (4),
- comprimer le premier composant (1) dans une zone de bord du perçage (4) de sorte que le matériau du premier composant (1) s'écoule vers la sphère (5) et s'ajuste en s'appliquant étroitement sur la périphérie externe de la sphère (5),
• avant ou après l'introduction à force au moins une autre sphère étant soudée sur la sphère (5), ou
• en tant que sphère (5) on utilise une sphère qui, avant l'introduction à force est une partie d'un élément de liaison constitué d'au moins deux sphères ou est une partie d'un élément de liaison qui outre la sphère à introduire à force comporte une autre partie,
**caractérisé en ce que**
le perçage est un perçage traversant et le diamètre de la sphère est au plus égal au diamètre du perçage traversant, la périphérie interne du perçage traversant se rapprochant de la périphérie externe de la sphère et la sphère étant introduite dans le perçage traversant de sorte que le plan équatorial de cette sphère soit situé dans le plan médian du premier composant.

2. Procédé conforme à la revendication 1,
**caractérisé en ce que**
lors de l'introduction à force du premier composant (1) le matériau de ce premier composant (1) s'écoule dans une zone située au-dessus et dans une zone située au-dessous du plan équatorial (6) de la sphère (5) et s'ajuste en s'appliquant étroitement sur la sphère (5) de façon à obtenir outre une liaison par friction également une liaison par la forme entre le premier composant (1) et la sphère (5).

3. Procédé conforme à l'une des revendications 1 et 2,
**caractérisé en ce que**
l'introduction à force est effectuée au moyen d'un outil supérieur (8) et d'un outil inférieur (9), l'outil supérieur (8) vient en prise avec le premier composant (1) par un premier côté de ce premier composant (1) et l'outil inférieur vient en prise avec le premier composant (1) par un second côté de ce premier composant (1) opposé au premier côté.

4. Procédé conforme à la revendication 3,
**caractérisé en ce que**
l'outil supérieur (8) et/ou l'outil inférieur (9) est(sont) réalisé(s) en forme de douille(s).

5. Procédé conforme à la revendication 3 ou 4,
**caractérisé en ce que**
sur la face frontale de l'outil supérieur (8) s'appliquant sur le premier composant (1) et/ou sur la face frontale de l'outil inférieur (9) s'appliquant sur le premier composant (1) il est prévu une saillie en forme de bourrelet (8a, 9a) qui est imprimée dans le premier composant (1) lors de l'introduction à force.

6. Procédé conforme à l'une des revendications 1 à 5,
**caractérisé en ce que**
en tant que premier composant on utilise une tôle métallique.

7. Procédé conforme à l'une des revendications 1 à 6,
**caractérisé en ce que**
la sphère (5) est une sphère métallique en particulier une sphère en acier.

8. Procédé conforme à l'une des revendications 1 à 7,
**caractérisé en ce que**
la sphère (5) est soudée avec le premier composant (1) après son introduction à force.

9. Procédé conforme à la revendication 8,
**caractérisé en ce que**
la soudure est effectuée par un dispositif de soudage laser situé à distance de la sphère (5).
